# EUROPEAN PATENT APPLICATION

(11) **EP 2 224 332 A1**
(43) Date of publication of application: **01.09.2010**
(21) Application number: 09153882.7
(22) Date of filing: 27.02.2009
(51) Int. Cl.: G06F 9/44, H04L 29/08

(54) **Communications system providing changeable mobile wireless communications device application skins based upon bidding and related methods**

(71) Applicant: RESEARCH IN MOTION LIMITED, Waterloo, Ontario N2L 3W8 (CA)
(72) Inventor: Bosan, Sorel, Waterloo, Ontario N2L 3L3 (CA); Zima, Janice, Waterloo, Ontario N2L 3L3 (CA); Martin-Cocher, Gaelle, Waterloo,Ontario L4W 5M4 (CA)
(74) Representative: Roberts, Gwilym Vaughan

(57) **Abstract**

A communications system may include a mobile wireless communications device which may in turn include a display and a processor cooperating therewith for running at least one application having a changeable skin. Additionally, a notification server may also be configured to select notification skin data based upon bids from notifiers, and push the selected advertising skin data to the mobile wireless communications device via a wireless communications network, Moreover, the processor may change the changeable skin based upon the pushed selected notification skin data.

## Description

### Technical Field

The present disclosure relates to the field of communications systems, and, more particularly, to mobile wireless communications systems and related methods.

### Background

Mobile communications systems continue to grow in popularity and have become an integral part of both personal and business communications. Mobile telephones allow users to place and receive voice calls most anywhere they travel. Moreover, as mobile telephone technology has increased, so too has the functionality of mobile devices and the different types of devices available to users. For example, many mobile devices now incorporate personal digital assistant (PDA) features such as calendars, address books, task lists, etc. Moreover, such multi-function devices may also allow users to wirelessly send and receive electronic mail (email) messages and access the Internet via a cellular network and/or a wireless local area network (WLAN), for example.

As a result, users continue to spend more time using their mobile devices during the course of a day performing information searches, reading emails, etc., as opposed to early cellular phones that were used only for phones calls. This has resulted in a significant interest from the advertising community in targeting advertisements to mobile devices.

One exemplary system for automatically changing the appearance of a software phone ("softphone") based upon a user profile is discussed in U.S. Patent Pub. No. 2008/0250475. A softphone application enables a user to make a phone call from a computing device using a Voice over Internet Protocol (VoIP). While the functionality of the softphone remains the same, its appearance is defined by a skin that can be changed. A server stores a profile for users of the softphone. Based on the user profile, the server selects a skin and pushes the skin to the users's softphone, thereby changing the appearance of the softphone. The skin can include advertisements and several layers that can be displayed simultaneously.

Despite the potential advantages of such approaches, further functionality may be desirable for providing mobile wireless communications device "themes" or "skins" of device applications for advertising or, more generally, notification purposes.

### Brief Description of the Drawings

FIG. 1 is a schematic block diagram of a communications system in accordance with one exemplary embodiment providing push-based notification application skins to mobile wireless communications devices based upon a bidding system.

FIG. 2 is a view of the display of the mobile wireless communications device of FIG. 1 running a browser application without skin data.

FIG. 3 is a view of the display of FIG. 2 after the browser application skin has been changed to include skin data from a first source.

FIG. 4 is a view of the display of FIG. 3 showing a second browser page skinned with a different application skin based upon application skin data from a second source.

FIG. 5 is a view of the display of the mobile wireless communications device of FIG. 1 running a different application skinned based upon application skin data from the second source.

FIG. 6 is a view of the display of the mobile wireless communications device of FIG. 1 showing an operating system (OS) application window including a plurality of application icons without skin data.

FIG. 7 is a view of the display of FIG. 6 after the OS application window has been changed to include skin icon data from the first source.

FIG. 8 is a flow diagram illustrating method aspects for providing push-based advertising application skins to mobile wireless communications devices based upon bidding in accordance with one exemplary embodiment.

FIG. 9 is a schematic block diagram illustrating exemplary components of a mobile wireless communications device that may be used in accordance with the system of FIG. 1.

### Detailed Description

The present description is made with reference to the accompanying drawings, in which various embodiments are shown. However, many different embodiments may be used, and thus the description should not be construed as limited to the embodiments set forth herein. Rather, these embodiments are provided so that this disclosure will be thorough and complete. Like numbers refer to like elements throughout, and prime notation is used to indicate similar elements or steps in alternative embodiments.

One technical problem addressed by the exemplary embodiments set forth herein is how to include supplemental notification information, such as advertising information, along with application windows, etc., on a relatively small mobile device display, yet without having to increase the physical dimensions of the display to accommodate both the windows and the supplemental notification information.

Generally speaking, this and other technical problems are addressed by a communications system is provided herein which may include a mobile wireless communications device which may in turn include a display and a processor cooperating therewith for running at least one application having a changeable skin. Additionally, a notification server (e.g., an advertising server) may also be configured to select notification (e.g., advertising) skin data based upon bids from notifiers (e.g., advertisers), and push the selected advertising skin data to the mobile wireless communications device via a wireless communications network. Moreover, the processor may change the changeable skin based upon the pushed selected skin data.

In one embodiment, the at least one application may include a plurality of different applications, and the notification server may push selected skin data from different notifiers to the mobile wireless communications device for respective different applications. In another embodiment, the at least one application may be a single application, and the notification server may push selected advertising skin data from different notifiers to the mobile wireless communications device for the single application.

By way of example, the skin data may include application window skin data, application icon skin data, etc. Also by way of example, the skin data may include logo data, color data, etc. The notification server may further select the skin data based upon a user preference profile. That is, the server may select the particular skin data for the mobile wireless communications device not only based upon the bids of notifiers, but also based upon preferences of the device user, so that the skins used on the device pertain to products or services that are of interest to the user, for example. In accordance with one exemplary implementation, the mobile wireless communications device may comprise a cellular communications device.

A related mobile wireless communications device may include a display and a processor cooperating therewith for running at least one application having a changeable skin. More particularly, the processor may receive notification skin data pushed from a notification server via a wireless communications network and selected based upon bids from notifiers. The processor may also change the changeable skin based upon the pushed selected skin data.

A notification server for use with a mobile wireless communications device, such as the one described briefly above, may include a memory and a processor cooperating therewith for selecting notification skin data based upon bids from notifiers, and pushing the selected advertising skin data to the mobile wireless communications device via a wireless communications network to cause the mobile wireless communications device to change the changeable skin based upon the pushed selected skin data.

A related mobile wireless advertising method may include selecting notification skin data for a mobile wireless communications device running at least one application having a changeable skin based upon bids from notifiers. The method may further include pushing the selected skin data to the mobile wireless communications device via a wireless communications network, and changing the changeable skin of the at least one application based upon the pushed selected skin data.

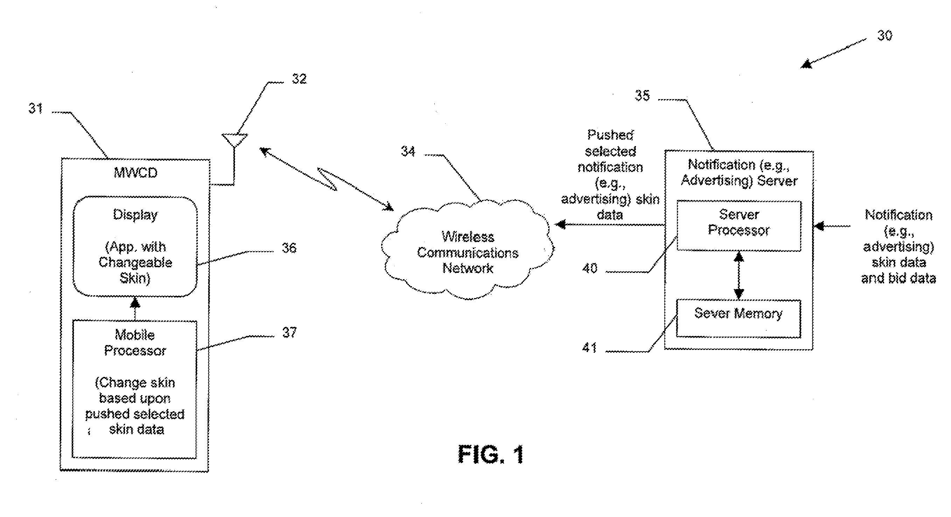

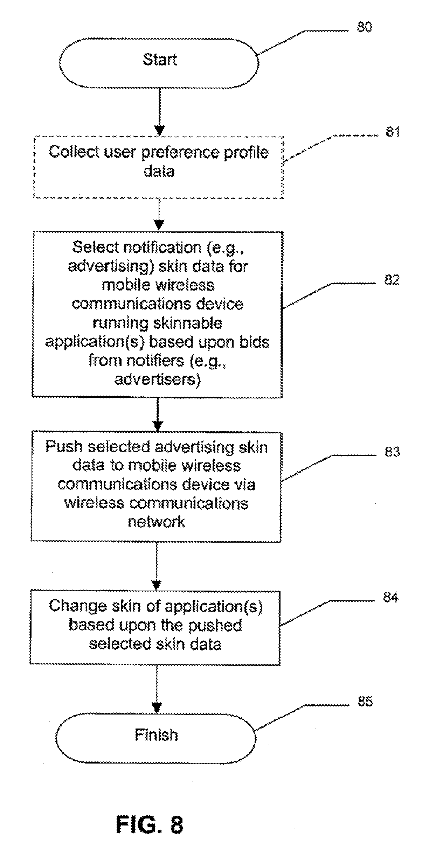

Referring initially to FIGS. 1 and 8, a communications system **30** and associated communications method aspects are first described. The system **30** illustratively includes one or more mobile wireless communications devices **31** (MWCDs), or mobile devices for short, and associated antenna(s) **32,** which may be an internal antenna(s), external antenna(s), or both. Moreover, the system **30** further illustratively includes a wireless communications network **34,** and notification (e.g., an advertising) server **35** that communicates with the mobile device **31** via the wireless communications network. In some embodiments, the advertising server **35** may communicate with the wireless communications network **34** via a wide area network, such as the Internet, for example (not shown).

By way of example, the mobile device **31** and wireless communications network **34** may operate in accordance with a cellular, wireless LAN (e.g., 802.11x, Bluetooth, etc.), WiMAX, satellite, etc., communications format, as will be appreciated by those skilled in the art. In some embodiments, more than one such wireless communications format may be used in the same device (e.g., cellular, wireless LAN, and Bluetooth). Various types of mobile wireless communications devices **31** may be used, such as mobile phones, PDAs, laptop computers, wireless-enabled cameras, wireless-enabled media players, etc., for example.

In some embodiments, the system **30** may advantageously be implemented in accordance with the Open Mobile Alliance (OMA) Mobile Advertising Requirements (see OMA-RD-Mobile-Advertising-V1_0-20080805-C, 2008 Open Mobile Alliance Ltd., Candidate Version 1.0, available at http://www.openmobilealliance.org/Technical/release_program /mobad_v1_0.aspx). In accordance with the OMA MobAd specification, the changeable skin data may be in an OMA look and feel customization (LFC) package. Similarly, the advertising server **35** may use a push server to deliver skin data to the mobile device **31.** By way of example, the advertising server may be an OMA MobAd server, and the push server may be an OMA dynamic content delivery (DCD) server, although other configurations are also possible.

The mobile wireless communications device **31** illustratively includes a display **36** and a mobile processor **37** cooperating therewith for running at least one application having a changeable skin. The mobile wireless communications device **31** may therefore be considered as a software phone capable of running skinnable mobile software applications. As will be appreciated by those skilled in the art, a "skin" may be associated with themes as custom graphical appearances (e.g., graphical user interfaces (GUIs)) and applied to certain software applications, websites, etc., to change the look and feel of such applications. Not only may a skin change the aesthetic appearance of an application, such as colors schemes, font types, etc., but they may also rearrange elements (e.g., window borders, icons, etc.) to make an application easier to use, etc. Examples of skinnable applications include applications for Web browsing, email, addresses/contacts, calendars, document processing, media (photos, images, videos, etc.), phone interfaces, etc.

The mobile processor **37** may be implemented using components such as a microprocessor, memory, etc., that cooperate to run the various software applications, as will be appreciated by those skilled in the art. The display **36** may be a liquid crystal display (LCD), for example, although other suitable types of displays may also be used in certain embodiments. The advertising server **35** illustratively includes one or more server processors **40** and server memory **41,** as will also be appreciated by those skilled in the art.

Beginning at Block **80,** the advertising server **35** may advantageously select notification (e.g., advertising) skin data for a given mobile wireless communications device **31** based upon bids from notifiers such as advertisers, at Block **82.** More particularly, the advertising server **35** may select the advertising skin data in various ways. One approach is that advertisers may establish an account with an advertising service operating the advertising server **35,** and load onto the advertising server **35** the various skins or skin data to be included in advertising skin templates (e.g., logos, color schemes, fonts, etc.), along with bid amounts that the advertiser is willing to pay to have the skins pushed to the mobile device(s) **31,** at Block **83**. As used therein, "push" or "pushed" means that the transfer of the advertising skin data is initiated by the advertising server **35** (i.e., the mobile device **31** does not have to request it).

In some embodiments, advertisers may be given various options as to how they wish to bid, such as demographics or geographic location of users they wish to target, times of the day when they want advertisements displayed, etc. Moreover, advertisers may bid different amounts based upon these factors. The server processor **40** may then select appropriate advertising skins for respective mobile devices **31** based upon these factors, as well as other considerations such as device type, including the wireless communications format used by the device (e.g., GSM, EDGE, 3G, etc.), graphics processing capabilities, user services plans, etc. That is, the advertising server **35** may tailor advertisements for respective mobile devices **31** so that the bandwidth or processing (or both) characteristics of the device are compatible with the feature level of the advertising skin data. By way of example, animations, video data, and high resolution graphics may not be appropriate for older devices, whereas these items would be appropriate for newer model devices with faster processors, lager memories, higher resolutions, etc., as will be appreciated by those skilled in the art.

In addition, the selection may also be based upon a user preference profile associated with the respective user of the given mobile device **31,** at Block **81.** More particularly, in consideration for the user allowing advertising on his or her mobile device **31,** the user may receive free or reduced wireless communications and data services. To receive the free or discounted service, the user may be required to provide information to the network provider or advertising service regarding personal preferences of the user, such as particular products or services that the user likes or dislikes, hobbies, interests, affiliations, etc. The server processor **40** may therefore also advantageously select appropriate advertising skin data that is compatible with or matches the respective user profile information so that advertising is more effectively directed to interested users, as will be appreciated by those skilled in the art. The user profile information may be stored in the server memory **41,** in a mobile device **31** memory, or both, or in another location, depending upon the given embodiment.

It should be noted that the advertising server **35** need not directly collect bidding data from advertisers in all embodiments. For example, the bidding or advertising skin data, or both, may be collected apart from the advertising server **35** and provided to the advertising server in the appropriate order or ranking so that the server can push the advertising skin data to the mobile device **31** accordingly. Moreover, it should be noted that the various functions of the advertising server **35** described herein need not be implemented or constrained within a single physical housing, but instead may be distributed across multiple server housings or platforms, which may also be geographically distributed, as will be appreciated by those skilled in the art.

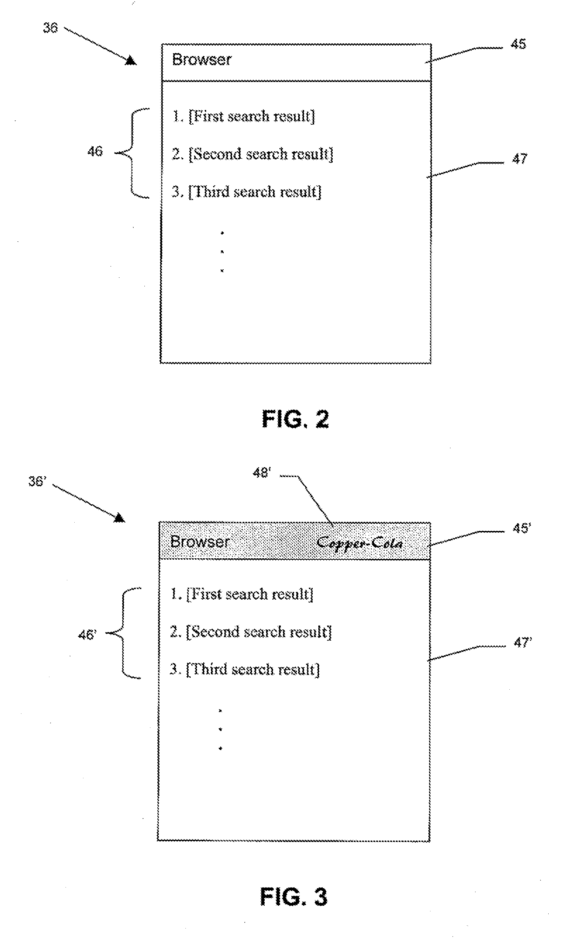

Once the advertising server **35** pushes the selected advertising skin data to the mobile device **31** via the wireless communications network **34,** the mobile processor **37** advantageously changes the changeable skin of the given application(s) based upon the pushed selected advertising skin data, at Block **84,** thus concluding the method illustrated in FIG. 8 (Block **85**). Turning now additionally to FIGS. 2 and 3, one exemplary embodiment of an application skin that is changed based upon advertising skin data is described. In the embodiment illustrated in FIG. 2, a browser (e.g., a Web browser) application is running on the device **31** and displayed on the display **36.** In this example the skin is a standard or default skin which has no advertising data therein, but rather includes a plain header bar **45** with the name of the application ("Browser") and text (i.e., search results) in a body **47** of the browser window. The color scheme of the header bar **45,** text **46,** and body **47** may be set based upon the default skin definition, as will be appreciated by those skilled in the art.

In the example illustrated in FIG. 3, the processor **37** has changed the default skin for the browser application based upon selected advertising skin data for a product entitled "Copper-Cola." In particular, a Copper-Cola logo **48'** is now included on the right-hand side of the header bar **45'**. Moreover, the color scheme of the default skin has been changed as well, as the header bar **45'** color has been changed to match a color associated with the Copper-Cola brand or trade dress, such as color commonly found on Copper-Cola cans and bottles, for example, as indicated by shading in FIG. 3.

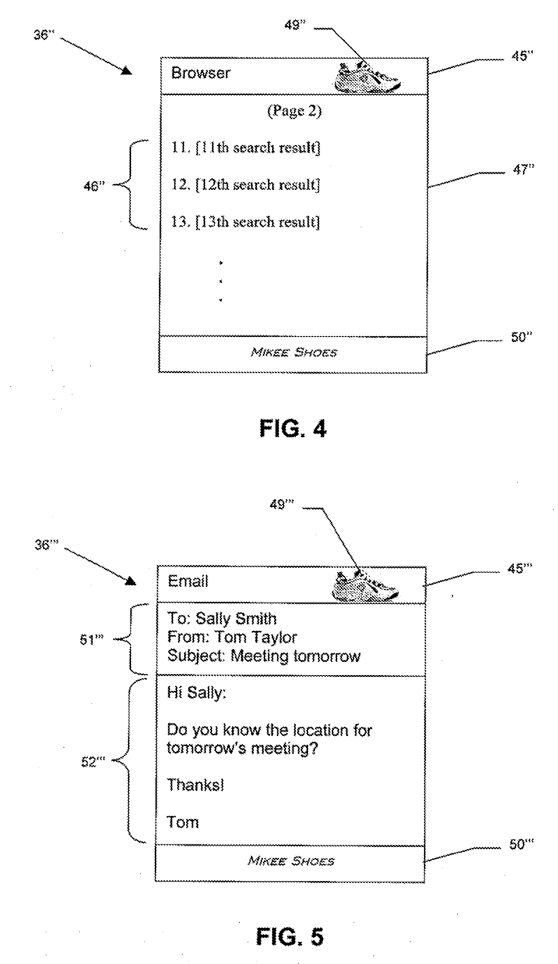

While all of the different windows or areas of the application may be skinned based upon advertising skin data for a same advertiser in some embodiments, in other embodiments different skins from different advertisers may be used. With reference to the example illustrated in FIG. 4, a second page of search results shown in the browser application (the first page of search results being shown in FIG. 3) is skinned based upon advertising skin data for "Mikee shoes." That is, the advertising server **35** advantageously pushes advertising skin data from both Copper-Cola and Mikee shoes (and optionally other advertisers as well) to the mobile device **31** so that the mobile processor **37** will advantageously change the changeable skin to use the different advertising skin data for different windows, layers, pages, etc., of the given application, as will be appreciated by those skilled in the art.

In the application view shown in FIG. 4, the Copper-Cola logo **48'** (FIG. 3) has been replaced with an image **49"** of a Mikee shoe. Moreover, a footer **50"** now appears at the bottom of the application window, which includes a "Mikee Shoes" logo in a different font than previously used. Moreover, the color of the header bar **45"** has also been changed relative to the Copper-Cola header bar **45'** of FIG. 3, and may be returned to the original color of the default skin or to another color(s). Other changes to the skin may also be made, as will be appreciated by those skilled in the art.

Referring additionally to FIG. 5, in some embodiments advertising skin data from different advertisers may be used for different mobile device applications. That is, one application (e.g., the Browser application) may be skinned based upon advertising skin data from Copper-Cola, as shown in the example of FIG. 3. Another application, such as the electronic mail (email) application illustrated in FIG. 5, may be skinned based upon advertising skin data from a different advertiser, here Mikee shoes. In the illustrated example, the email application is displaying a window with an email message received by a device user (Sally Smith) from a sender (Tom Taylor). This shoe image **49"'** again appears in the right-hand side of the header bar **45"'**, and the footer **50"'** with the Mikee Shoes logo is again present. Additionally, the email window includes an upper region **51"** with message recipient/subject information, and a lower or body region **52"** including the text of the email message, as will be appreciated by those skilled in the art.

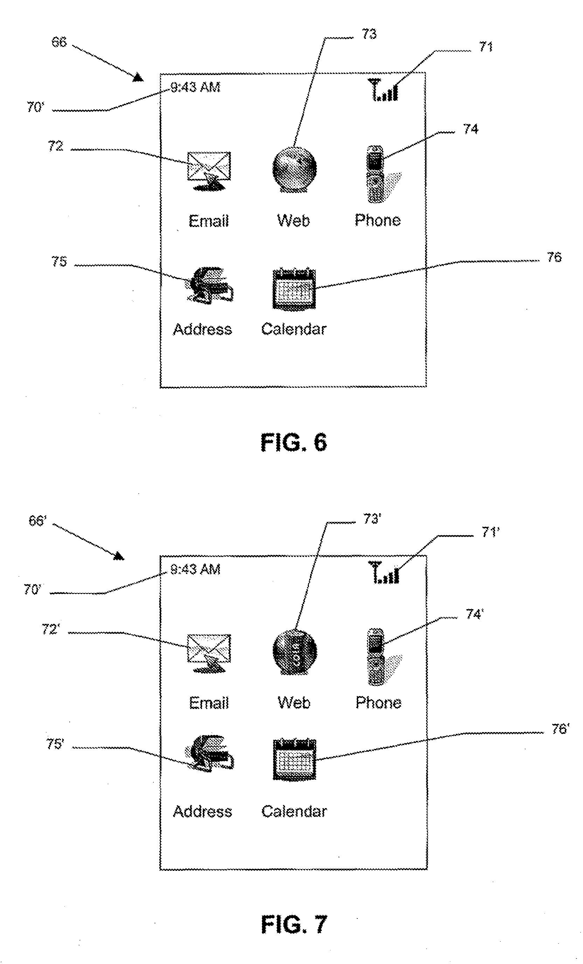

Turning now additionally to FIGS. 6 and 7, another way in which an application skin (e.g., an operating system (OS)) skin may be changed is by changing icons based upon pushed advertising skin data. A default or standard operating skin is shown on a display **66** along with a time indicator **70,** wireless signal strength indicator **71,** and application icons **72-76** for initiating email, browser, telephone, address, and calendar applications, respectively. In FIG. 7, the browser icon **73'** has been changed from the globe seen in FIG. 6 to include a can of cola in front of the globe. Thus, referring again to the example of FIG. 3, if Copper-Cola is sponsoring the browser application, for example, then the icon **73'** may advantageously be "branded" with a Copper-Cola can in the OS skin as shown in FIG. 7. Again, other skin features, such as header/footer bars, colors, fonts, etc., may also be changed as well.

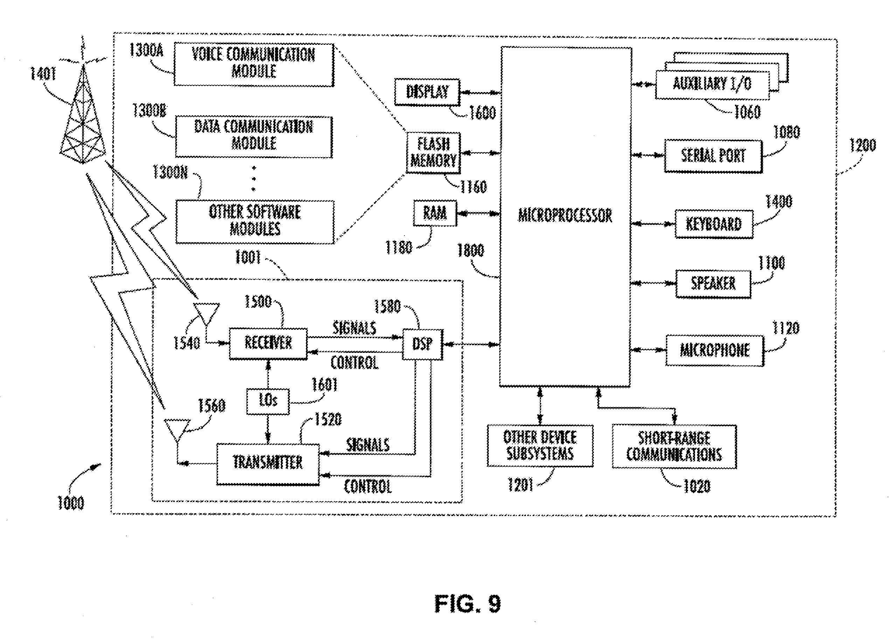

Exemplary components of a mobile wireless communications device **1000** that may be used in accordance with the system **30** are further described in the example below with reference to FIG. 9. The device **1000** illustratively includes a housing **1200,** a key pad **1400** and an output device 1600. The output device shown is a display **1600,** which may comprise a full graphic LCD. In some embodiments, display **1600** may comprise a touch-sensitive input and output device. Other types of output devices may alternatively be utilized. A processing device **1800** is contained within the housing **1200** and is coupled between the key pad **1400** and the display **1600**. The processing device **1800** controls the operation of the display **1600,** as well as the overall operation of the mobile device **1000,** in response to actuation of keys on the key pad **1400** by the user. In some embodiments, key pad **1400** may comprise a physical key pad or a virtual key pad (e.g., using a touch-sensitive interface) or both.

The housing **1200** may be elongated vertically, or may take on other sizes and shapes (including clamshell housing structures). The key pad **1400** may include a mode selection key, or other hardware or software for switching between text entry and telephony entry.

In addition to the processing device **1800,** other parts of the mobile device **1000** are shown schematically in FIG. 9. These include a communications subsystem **1001**; a short-range communications subsystem **1020;** the key pad **1400** and the display **1600,** along with other input/output devices **1060, 1080, 1100** and **1120**; as well as memory devices **1160**, **1180** and various other device subsystems **1201.** The mobile device **1000** may comprise a two-way RF communications device having voice and data communications capabilities. In addition, the mobile device **1000** may have the capability to communicate with other computer systems via the Internet.

Operating system software executed by the processing device **1800** may be stored in a persistent store, such as the flash memory **1160**, but may be stored in other types of memory devices, such as a read only memory (ROM) or similar storage element. In addition, system software, specific device applications, or parts thereof, may be temporarily loaded into a volatile store, such as the random access memory (RAM) **1180**. Communications signals received by the mobile device may also be stored in the RAM **1180**.

The processing device **1800,** in addition to its operating system functions, enables execution of software applications **1300A-1380N** on the device **1000**. A predetermined set of applications that control basic device operations, such as data and voice communications **1300A** and **1300B**, may be installed on the device **1000** during manufacture. In addition, a personal information manager (PIM) application may be installed during manufacture. The PIM may be capable of organizing and managing data items, such as e-mail, calendar events, voice mails, appointments, and task items. The PIM application may also be capable of sending and receiving data items via a wireless network **1401.** The PIM data items may be seamlessly integrated, synchronized and updated via the wireless network **1401** with the device user's corresponding data items stored or associated with a host computer system.

Communication functions, including data and voice communications, are performed through the communications subsystem **1001,** and possibly through the short-range communications subsystem. The communications subsystem **1001** includes a receiver **1500**, a transmitter **1520,** and one or more antennas **1540** and **1560**, In addition, the communications subsystem **1001** also includes a processing module, such as a digital signal processor (DSP) **1580,** and local oscillators (LOs) **1601**. The specific design and implementation of the communications subsystem **1001** is dependent upon the communications network in which the mobile device **1000** is intended to operate. For example, a mobile device **1000** may include a communications subsystem **1001** designed to operate with the Mobitex^{™}, Data TAC^{™} or General Packet Radio Service (GPRS) mobile data communications networks, and also designed to operate with any of a variety of voice communications networks, such as AMPS, TDMA, COMA, WCDMA, PCS, GSM, EDGE, etc. Other types of data and voice networks, both separate and integrated, may also be utilized with the mobile device **1000.** The mobile device **1000** may also be compliant with other communications standard such as 3GSM, 3G, UMTS, 4G, etc.

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore utilizes a subscribe identity module, commonly referred to as a SIM card, in order to operate on a GPRS network.

When required network registration or activation procedures have been completed, the mobile device **1000** may send and receive communications signals over the communication network **1401.** Signals received from the communications network **1401** by the antenna **1540** are routed to the receiver **1500,** which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP **1580** and are then provided to the transmitter **1520** for digital to analog conversion, frequency up conversion, filtering, amplification and transmission to the communication network **1401** (or networks) via the antenna **1560.**

In addition to processing communications signals, the DSP **1580** provides for control of the receiver **1500** and the transmitter **1520.** For example, gains applied to communications signals in the receiver **1500** and transmitter **1520** may be adaptively controlled through automatic gain control algorithms implemented in the DSP **1580**.

In a data communications mode, a received signal, such as a text message or web page download, is processed by the communications subsystem **1001** and is input to the processing device **1800.** The received signal is then further processed by the processing device **1800** for an output to the display **1600**, or alternatively to some other auxiliary I/O device **1060**. A device user may also compose data items, such as e-mail messages, using the key pad **1400** and/or some other auxiliary I/O device **1060,** such as a touchpad, a rocker switch, a thumb-wheel, track ball, or some other type of input device. The composed data items may then be transmitted over the communications network **1401** via the communications subsystem **1001.**

In a voice communications mode, overall operation of the device is substantially similar to the data communications mode, except that received signals are output to a speaker **1100,** and signals for transmission are generated by a microphone **1120**. Alternative voice or audio I/O subsystems, such as a voice message recording subsystem, may also be implemented on the device **1000.** In addition, the display **1600** may also be utilized in voice communications mode, for example to display the identity of a calling party, the duration of a voice call, or other voice call related information.

The short-range communications subsystem enables communication between the mobile device **1000** and other proximate systems or devices, which need not necessarily be similar devices. For example, the short-range communications subsystem may include an infrared device and associated circuits and components, or a Bluetooth™ communications module to provide for communication with similarly-enabled systems and devices.

Many modifications and other embodiments will come to the mind of one skilled in the art having the benefit of the teachings presented in the foregoing descriptions and the associated drawings. Therefore, it is understood that various modifications and embodiments are intended to be included within the scope of the appended claims.

## Claims

1. A communications system (30) comprising;
a mobile wireless communications device (31) comprising a display (36) and a processor (37) cooperating therewith for running at least one application having a changeable skin; and
a notification server (3S) configured to
select notification skin data based upon bids from notifiers, and
push the selected notification skin data to said mobile wireless communications device via a wireless communications network (34);
wherein said processor is configured to change the changeable skin based upon the pushed selected notification skin data.

2. The communications system (30) of Claim 1 wherein the at least one application comprises a plurality of different applications; and
wherein said notification server (35) pushes selected notification skin data from different notifiers to said mobile wireless communications device (31) for respective different applications.

3. The communications system (30) of Claim 1 wherein the at least one application comprises a single application; and
wherein said notification server (35) pushes selected notification skin data from different notifiers to said mobile wireless communications device (31) for the single application.

4. The communications system (30) of Claim 1 wherein the notification skin data comprises application window skin data.

5. The communications system (30) of Claim 1 wherein the notification skin data comprises application icon skin data.

6. The communications system (30) of Claim 1 wherein the notification skin data comprises notifier logo skin data.

7. The communications system (30) of Claim 1 wherein the notification skin data comprises notification color skin data.

8. The communications system (30) of Claim 1 wherein said notification server (35) is further configured to select the notification skin data based upon a user preference profile.

9. The communications system (30) of Claim 1
wherein the notification server (35) comprises an advertising server; wherein the notification skin data comprises advertising skin data; and
wherein the notifiers comprise advertisers.

10. A mobile wireless notification method comprising:
selecting notification skin data for a mobile wireless communications device (31) running at least one application having a changeable skin based upon bids from notifiers;
pushing the selected notification skin data to the mobile wireless communications device via a wireless communications network (34); and
changing the changeable skin of the at least one application based upon the pushed selected notification skin data.

11. The method of Claim 10 wherein the at least one application comprises a plurality of different applications; and
wherein pushing comprises pushing selected notification skin data from different notifiers to the mobile wireless communications device (31) for respective different applications.

12. The method of Claim 10 wherein the at least one application comprises a single application; and
wherein pushing comprises pushing selected notification skin data from different notifiers to the mobile wireless communications device (31) for the single application.

13. The method of Claim 10 wherein the notification skin data comprises application window skin data.

14. The method of Claim 10 wherein the notification skin data comprises advertiser logo skin data.

15. The method of Claim 10 wherein the notification skin data comprises advertisement color skin data.

## Amended claims

### Amended claims in accordance with Rule 137(2) EPC.

**1.** A communications system (30) comprising:
a mobile wireless communications device (31) comprising a display (36) and a processor (37) cooperating therewith for running at least one application having a changeable skin; and
a notification server (35) configured to
receive notification skin data from respective notifiers along with bids defining bid amounts the notifiers will pay to have the notification skin data pushed to said mobile wireless communications device,
select notification skin data based upon the bids from the notifiers, and
push the selected notification skin data to said mobile wireless communications device via a wireless communications network (34);
wherein said processor is configured to change the changeable skin based upon the pushed selected notification skin data.

**2.** The communications system (30) of Claim 1 wherein the at least one application comprises a plurality of different applications; and
wherein said notification server (35) pushes selected notification skin data from different notifiers to said mobile wireless communications device (31) for respective different applications.

**3.** The communications system (30) of Claim 1 wherein the at least one application comprises a single application; and
wherein said notification server (35) pushes selected notification skin data from different notifiers to said mobile wireless communications device (31) for the single application.

**4.** The communications system (30) of Claim 1 wherein the notification skin data comprises application window skin data.

**5.** The communications system (30) of Claim 1 wherein the notification skin data comprises application icon skin data.

**6.** The communications system (30) of Claim 1 wherein the notification skin data comprises notifier logo skin data.

**7.** The communications system (30) of Claim 1 wherein the notification skin data comprises notification color skin data.

**8.** The communications system (30) of Claim 1 wherein said notification server (35) is further configured to select the notification skin data based upon a user preference profile.

**9.** The communications system (30) of Claim 1
wherein the notification server (35) comprises an advertising server; wherein the notification skin data comprises advertising skin data; and
wherein the notifiers comprise advertisers.

**10.** A mobile wireless notification method comprising:
receiving at a notification server (35) notification skin data from respective notifiers along with bids defining bid amounts the notifiers will pay to have the notification skin data pushed to a mobile wireless communications device;
selecting notification skin data for a the mobile wireless communications device (31) running at least one application having a changeable skin based upon the bids from the notifiers;
pushing the selected notification skin data to the mobile wireless communications device via a wireless communications network (34); and
changing the changeable skin of the at least one application based upon the pushed selected notification skin data.

**11.** The method of Claim 10 wherein the at least one application comprises a plurality of different applications; and
wherein pushing comprises pushing selected notification skin data from different notifiers to the mobile wireless communications device (31) for respective different applications.

**12.** The method of Claim 10 wherein the at least one application comprises a single application; and
wherein pushing comprises pushing selected notification skin data from different notifiers to the mobile wireless communications device (31) for the single application.

**13.** The method of Claim 10 wherein the notification skin data comprises application window skin data.

**14.** The method of Claim 10 wherein the notification skin data comprises advertiser logo skin data.

**15.** The method of Claim 10 wherein the notification skin data comprises advertisement color skin data.
